# EUROPÄISCHE PATENTSCHRIFT

(11) **EP 4 066 234 B1**
(45) Veröffentlichungstag und Bekanntmachung des Hinweises auf die Patenterteilung: **21.06.2023**
(21) Anmeldenummer: 20820317.4
(22) Anmeldetag: 27.11.2020
(51) Int. Cl.: G10D 1/02, G09B 15/06, G10D 3/06, G10H 1/055, G10H 1/34

(54) **VORRICHTUNG ZUR ERFASSUNG DES GRIFFMUSTERS BEIM SPIELEN EINES STREICHINSTRUMENTS SOWIE STREICHINSTRUMENT MIT EINER SOLCHEN VORRICHTUNG**
DEVICE FOR DETECTING THE GRIP PATTERN WHEN PLAYING A BOWED INSTRUMENT, AND BOWED INSTRUMENT COMPRISING SUCH A DEVICE
DISPOSITIF DE DÉTECTION DU PROFIL DE PRÉHENSION LORS DE L'UTILISATION D'UN INSTRUMENT À ARCHET, ET INSTRUMENT À ARCHET COMPRENANT UN TEL DISPOSITIF

(30) Priorität: 29.11.2019 AT 510432019
(43) Veröffentlichungstag der Anmeldung: 05.10.2022
(73) Patentinhaber: BATICCI, Alessandro, 1030 Wien (AT); Zalech, Rafal, 1130 Wien (AT)
(72) Erfinder: BATICCI, Alessandro, 1030 Wien (AT); Zalech, Rafal, 1130 Wien (AT)
(74) Vertreter: SONN Patentanwälte OG
(86) Internationale Anmeldenummer: PCT/AT2020/060422
(87) Internationale Veröffentlichungsnummer: WO 2021/102499

(56) Entgegenhaltungen:
- FR-A1- 2 598 017
- US-A- 3 694 559
- US-A- 5 117 730
- US-A1- 2009 260 508

## Beschreibung

Die Erfindung betrifft eine Vorrichtung zur Erfassung des Griffmusters beim Spielen eines Streichinstruments mit zumindest zwei Saiten, welche zwischen einer Schnecke und einem Steg über einem gewölbten Griffbrett gespannt sind, mit einer auf dem Griffbrett anordenbaren Sensorfolie zur Erfassung des Griffmusters, welche Sensorfolie aus zumindest einer Widerstandsschicht, einer Leitschicht und einer dazwischen angeordneten Abstandschicht gebildet ist, und mit einer mit der Sensorfolie verbundenen Auswerteschaltung, mit welcher Auswerteschaltung die durch das Griffmuster hervorgerufenen Widerstandsänderungen der Sensorfolie erfassbar sind, wobei die untere, dem Griffbrett in montiertem Zustand zugewandte, Schicht der Sensorfolie durch die Widerstandsschicht gebildet ist, welche Widerstandsschicht in einer der Anzahl an Saiten des Streichinstruments entsprechenden Anzahl an Widerstandsbahnen unterteilt ist, und die obere, dem Griffbrett im montierten Zustand abgewandte Schicht der Sensorfolie durch die Leitschicht gebildet ist.

Ebenso betrifft die Erfindung ein Streichinstrument, insbesondere eine Geige, mit zumindest zwei über einem gewölbten Griffbrett zwischen einer Schnecke und einem Steg gespannten Saiten mit einer solchen Vorrichtung.

Aus dem Stand der Technik sind Vorrichtungen zur Erfassung der Fingerposition bei Streichinstrumenten bekannt, deren zentrales Element eine am Griffbrett angebrachte Sensorfolie ist. Beispielsweise besteht die Sensorfolie aus gedruckten Leiterbahnen, eine unter jeder Saite des Streichinstruments, einer darüber angeordneten Velostatschicht und einer Abstandschicht, die aus zwischen den Leiterbahnen angeordneten Streifen gebildet ist. Beim Spielen des Streichinstruments wird durch den Druck der Finger auf das Griffbrett ein Kontakt zwischen der Velostatschicht und der Leiterbahn hergestellt. Über einen entsprechenden Stromkreis kann ein von der Fingerposition abhängiger Widerstandswert über eine Spannungsmessung bei eingeprägtem Strom gemessen werden. Die Messung der Widerstandswerte erfolgt üblicherweise zeitlich hintereinander. Häufig stellt die Dicke der Sensorfolie, welche eine Anbringung am Streichinstrument wegen des geringen Abstands zwischen Saiten und Griffbrett ausschließt, ein Problem dar. Für die Anbringung einer solchen Sensorfolie wäre eine Erhöhung des Sattels bzw. eine tiefere Anordnung des Griffbretts selbst notwendig, was aber zu einer Beeinträchtigung des Instruments und daher des Spielgefühls führen könnte.

In der US 2009/0260508 A1 ist eine Vorrichtung zur Erfassung der Griffmuster beim Spielen eines Musikinstruments mit einem Griffbrett dargestellt. Das elektronische Griffbrett umfasst eine Leitschicht, eine Widerstandsschicht und eine dazwischen angeordnete Abstandsschicht. Der gespielte Ton wird vom Widerstand der Widerstandsschicht festgelegt, der durch die Fingerposition am Griffbrett definiert wird. Eine Anwendung auf Streichinstrumenten, die eine Krümmung des Griffbretts in einer Richtung quer zur Längsrichtung aufweisen, wird nicht beschrieben.

Die US 5,117,730 A beschreibt eine elektronische Vorrichtung zur Verwendung in einem Streichinstrument, wobei Sensoren mit Widerstandsbahnen zur Erfassung des Griffmusters am Griffbrett angeordnet sind.

Die FR 2 598 017 A1 offenbart den Oberbegriff des Anspruchs 1.

Die Aufgabe der vorliegenden Erfindung besteht in der Schaffung einer Vorrichtung zur Erfassung des Griffmusters beim Spielen eines Streichinstruments und eines Streichinstruments mit einer solchen Vorrichtung, durch welche eine möglichst genaue und rasche Erfassung des Griffmusters ermöglicht wird, und welche keine negative Beeinflussung beim Spielen des Musikinstruments bewirkt. Nachteile des Standes der Technik sollen beseitigt oder zumindest verbessert werden.

Diese Aufgabe wird durch eine Vorrichtung gemäß Anspruch 1 gelöst, wobei die Breite jeder Widerstandsbahn von einem Ende der Sensorfolie, welches im montierten Zustand der Schnecke zugewandt ist, zum anderen Ende der Sensorfolie, welches im montierten Zustand dem Steg zugewandt ist, linear zunehmend ausgebildet ist, die Sensorfolie eine der Wölbung des Griffbretts entsprechende Krümmung in einer Richtung quer zur Längsrichtung aufweist, sodass in Querrichtung der Sensorfolie ein im Wesentlichen konstanter Abstand zwischen den Widerstandsbahnen und der Leitschicht resultiert, und die Auswerteschaltung mehrere Eingänge zur parallelen Verbindung mit jeder Widerstandsbahn der Sensorfolie und zur parallelen Verarbeitung des Griffmusters aufweist.

Der Vorteil dieser Ausführung mit einer in einzelne Widerstandsbahnen unterteilten Widerstandsschicht liegt darin, dass das Griffmuster aller Saiten gleichzeitig erfasst werden kann und der Widerstand jeder Widerstandsbahn gleichzeitig ausgelesen werden kann. Der Erfindungsgegenstand ermöglicht eine genaue und rasche Messung des Griffmusters bzw. der Positionen der Finger an jeder einzelnen Saite und verhindert eine mögliche Beeinflussung der Messungen an den einzelnen Saiten untereinander, da die Widerstandsbahnen voneinander getrennt sind.

Die erfindungsgemäße Ausführung der einzelnen Widerstandsbahnen, die im Verlauf von der Schnecke zum Steg des Streichinstruments eine zunehmende Breite aufweisen, hat den Vorteil, dass eine größere Kontaktfläche für die Erfassung der Fingerpositionen im Bereich höherer Töne zur Verfügung steht, wo eine größere transversale Bewegung oder Auslenkung der Saiten gängig ist. Durch die breitere Kontaktfläche im Bereich des Griffbretts, welches dem Steg näher liegt, ist es möglich, auch Griffe zu erfassen, bei denen die Fingerpositionen am Griffbrett quer zur Saite verschoben sind.

Dadurch, dass die vorgefertigte Sensorfolie bereits eine der Wölbung des Griffbretts entsprechende Krümmung in einer Richtung quer zur Längsrichtung aufweist, kann gewährleistet werden, dass auch bei montierter Sensorfolie ein im Wesentlichen konstanter Abstand zwischen den Widerstandsbahnen und der Leiterbahn in Querrichtung resultiert. Dadurch kann die Sensorfolie besonders dünn ausgeführt werden, wodurch eine nachträgliche Anbringung auf dem Streichinstrument ohne negative Beeinflussung für den Musiker und das Instrument möglich ist. Wenn die Sensorfolie flach vorgefertigt wäre, entstehen beim Aufbringen auf das gewölbte Griffbrett Spannungen und unterschiedliche Abstände zwischen den Schichten der Sensorfolie bis hin zu möglichen Kurzschlüssen zwischen der Leitschicht und den Widerstandsbahnen. Um derartige Kurzschlüsse zu verhindern, müssten die Abstandhalter zwischen der Leitschicht und der Widerstandsschicht dicker ausgeführt werden, wodurch die Gesamtdicke der Sensorfolie erhöht würde. Durch die erfindungsgemäße Wölbung der Sensorfolie, die bereits in der Fertigung berücksichtigt wird, können die genannten Nachteile vermieden werden und die Abstandhalter dünner ausgeführt werden, ohne Gefahr von Kurzschlüssen oder ungewollten Kontaktierungen der Leitschicht mit der Widerstandsschicht.

Die gegenständliche Erfassungsvorrichtung kann einerseits dazu verwendet werden, über das ermittelte Griffmuster eine Echtzeit-Steuerung von virtuellen und synthetischen Klängen zu erzielen, sowie zur Echtzeit-Aufzeichnung der Tonhöhen in den gängigen Softwareprogrammen für digitale Notation. Andererseits kann die erfindungsgemäße Erfassungsvorrichtung auch zu Schulungszwecken eingesetzt werden, um ein Feedback zu den gegriffenen Tonhöhen zu erzeugen. Denkbar ist auch eine Kombination der Erfassungsvorrichtung mit einer dafür konzipierten Lernsoftware auf einem Personalcomputer, welche ein Erfassen des Griffmusters auf dem Instrument erleichtern kann.

Die Vorrichtung weist eine Auswerteschaltung mit mehreren Eingängen auf, deren Anzahl zumindest der Anzahl der Widerstandsbahnen entspricht, die zur parallelen Verbindung der einzelnen Widerstandsbahnen der Sensorfolie mit der Auswerteschaltung dienen und eine parallelen Verarbeitung des Griffmusters ermöglichen. Durch die parallele Auswertung der einzelnen Widerstandsbahnen in der Auswerteschaltung können die Positionen der einzelnen Finger ohne Verwendung eines Multiplexers gleichzeitig erfasst werden. Dadurch kann die Erfassungsgeschwindigkeit erhöht und eine Erfassung des Griffmusters quasi in Echtzeit erzielt werden.

Die Breite jeder Widerstandsbahn der Sensorfolie ist vom einen Ende der Sensorfolie, welches im montierten Zustand der Schnecke zugewandt ist, zum anderen Ende der Sensorfolie, welches im montierten Zustand dem Steg zugewandt ist, linear zunehmend ausgebildet. Dies erleichtert die Fertigung, da die Streifen der Abstandschicht, die den Abstand zwischen der Leitschicht und der Widerstandsschicht festlegen, gerade ausgeführt werden können. Außerdem kann auf diese Weise ein einfacherer Zusammenhang zwischen dem Widerstand der Widerstandsschicht und der Fingerposition erzielt werden. Dieses nichtlineare Verhältnis zwischen den gemessenen Widerstandswerten zur jeweiligen Fingerposition und somit der resultierenden Frequenz der jeweiligen Saite kann mit entsprechenden Korrekturtabellen oder Funktionen linearisiert werden.

Vorteilhafterweise weist die Sensorfolie in Längsrichtung einen Teilbereich auf, der geringere Dicke aufweist als die Dicke der übrigen Sensorfolie. Der Teilbereich mit geringerer Dicke befindet sich vorzugsweise am der Schnecke zugewandten Bereich der Sensorfolie. Üblicherweise ist durch den sehr geringen Abstand zwischen Saite und Griffbrett eines Streichinstruments im Bereich der Schnecke wenig Platz für die Sensorfolie vorhanden. Die geringere Höhe der Sensorfolie in diesem Teilbereich erleichtert die nachträgliche Anordnung der Sensorfolie am Griffbrett, ohne dass weitere bauliche Vorkehrungen (beispielsweise eine Erhöhung des Sattels) notwendig sind, welche die Eigenschaften beim Spielen des Streichinstruments beeinflussen könnten.

In einer Ausführungsform ist der Teilbereich der Sensorfolie mit geringerer Dicke durch eine dünnere Abstandschicht gebildet, was herstellungstechnisch besonders einfach und kostengünstig umsetzbar ist.

In einer alternativen Ausführungsform weist die Sensorfolie eine linear von der Schnecke in Richtung Steg abnehmende Dicke auf. Dies erhöht zwar den Herstellungsaufwand durch die speziell gestalteten Abstandsschichten, ermöglicht aber eine optimale Anpassung an die geometrischen Gegebenheiten des Streichinstruments und eine optimale Erfassung des Griffmusters.

Vorzugsweise beinhaltet die Widerstandsschicht der Sensorfolie Kohlenstoff. Dies hat im Vergleich zu einem piezoresistiven Material den Vorteil, dass der Widerstandswert druckunabhängig ist. Dadurch ist eine genauere Erfassung der Fingerposition möglich, da der Widerstandswert besser reproduzierbar ist.

Vorteilhafterweise besteht die Leitschicht der Sensorfolie aus Silber oder beinhaltet Silber. Durch die charakteristische hohe Leitfähigkeit von Silber weist die Leitschicht auch bei sehr geringer Schichtdicke noch einen niedrigen Widerstandswert auf.

In einer bevorzugten Ausführungsform der Vorrichtung besteht die Abstandschicht der Sensorfolie aus einzelnen Streifen aus Kunststoff, insbesondere Polyimid oder Polyamid, welche vorzugsweise beidseitig mit einer Klebeschicht versehen sind. Diese einzelnen Streifen werden zwischen den Leiterbahnen angebracht. Ein Vorteil dieser Streifen aus Kunststoff ist, dass dadurch die notwendige Isolierung zwischen Widerstands- und Leitschicht einfach hergestellt werden kann. Darüber hinaus sind derartige Materialien preisgünstig und leicht bearbeitbar.

In einer weiteren Ausführungsform wird auf eine Seite der Leitschicht Kohlenstoff aufgebracht. Dabei wird der Kohlenstoff auf der Seite aufgebracht, die der mit einem leitfähigen Material beschichteten Seite gegenüberliegt. Auf diese äußere Kohlenstoffschicht wird vorzugsweise eine transparente Abdeckschicht angebracht. Dadurch wird die Optik der Oberfläche des Griffbretts des Streichinstruments durch die daran angeordnete Sensorfolie nicht wesentlich beeinflusst.

Vorzugsweise ist an der dem Griffbrett in montiertem Zustand zugewandten Widerstandsschicht der Sensorfolie eine Klebeschicht angeordnet, die es ermöglicht, die Sensorfolie rasch, einfach, gleichmäßig und eben am Griffbrett anzubringen. Bei Auswahl geeigneter Klebestoffe kann die Sensorfolie auch wieder rückstandsfrei vom Griffbrett entfernt werden.

Um das Gefühl für das Instrument beim Spielen so wenig wie möglich zu verändern, ist es vorteilhaft, wenn die Sensorfolie eine minimale Dicke kleiner 0,7 mm, vorzugsweise kleiner 0,5 mm, besonders bevorzugt kleiner 0,35 mm, aufweist. Insbesondere in dem der Schnecke zugewandten Teilbereich des Griffbretts ist die Verwendung einer besonders dünnen Sensorfolie wichtig.

Gemäß einem weiteren Merkmal der Erfindung beinhaltet die Auswerteschaltung einen Mikrocontroller. Dadurch ist es möglich, die erfassten Widerstandswerte direkt vorzuverarbeiten.

Zusätzlich kann die Auswerteschaltung mit einem Sender verbunden sein, der die erfassten Widerstandswerte an einen entsprechenden Empfänger sendet. Der Sender kann dabei beispielsweise als Blue-tooth^{®}- oder Wifi-Sender ausgeführt sein, der bereits im Mikrocontroller integriert sein kann. Die gesendeten Daten können damit an ein externes Gerät gesendet und weiterverarbeitet oder aufgezeichnet werden oder sie können an ein Audio-Ausgabe-Gerät zum direkten Abspielen gesendet werden.

Vorteilhafterweise ist die Auswerteschaltung außerdem mit einer Schnittstelle verbunden, zur Übertragung der Daten von der Auswerteschaltung oder zur Programmierung einzelner Teile der Auswerteschaltung, insbesondere des Mikrocontrollers.

In einer weiteren Ausführungsform ist ein Bewegungssensor zur Erfassung der translatorischen Bewegung, insbesondere ein 3-D Gyroskop, vorgesehen und mit der Auswerteschaltung verbunden. Damit kann zusätzlich zur gespielten Musik auch die Bewegung des Instruments, und somit des Spielers, aufgezeichnet werden. Damit kann einem Spieler zusätzliches Feedback über seine Bewegung während des Spiels gegeben werden.

Gemäß einem weiteren Merkmal ist ein Mikrofon, insbesondere ein Kontaktmikrofon, vorgesehen und mit der Auswerteschaltung verbunden. Durch das Mikrofon kann die gespielte Musik aufgezeichnet werden und dazu verwendet werden, die mit der Sensorfolie aufgezeichneten Griffe, und somit Töne, zu überprüfen oder auch die Sensorfolie zu kalibrieren.

Gelöst wird die erfindungsgemäße Aufgabe auch durch ein oben genanntes Streichinstrument, insbesondere eine Geige, mit zumindest zwei über einem gewölbten Griffbrett zwischen einer Schnecke und einem Steg gespannten Saiten, bei dem eine oben erwähnte Vorrichtung zur Erfassung des Griffmusters beim Spielen vorgesehen ist. Ein derartiges Streichinstrument hat den Vorteil, dass die erfassten Griffmuster, die beim Spielen entstehen, besonders rasch, allenfalls mit einer sehr geringen Zeitverzögerung quasi in Echtzeit erfasst werden können, da die Information über den gespielten Ton mit dem Druck der Finger auf das Griffbrett und nicht durch die digital aufwendigen üblichen Tonhöhen-Erkennungs-Mechanismen ermittelt wird. Dies kann bei der Steuerung von virtuellen bzw. synthetischen Klängen die Verzögerungszeit zwischen dem Spielen und der Wiedergabe stark reduzieren, was zu einem verbesserten Erlebnis für die Zuhörer führt. Zu den weiteren erzielbaren Vorteilen wird auf die obige Beschreibung der Erfassungsvorrichtung verwiesen.

Vorteilhafterweise ist die Sensorfolie am Griffbrett aufgeklebt. Dies ermöglicht eine einfache nachträgliche Herstellung des mit der Erfassungsvorrichtung ausgestatteten Streichinstruments.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im einzelnen:
- Fig. 1: schematisch eine Explosionsdarstellung der Sensorfolie;
- Fig. 2: schematisch eine Draufsicht auf die Widerstandsschicht der Sensorfolie;
- Fig. 3: schematisch einen Schnitt durch die Sensorfolie, quer zur Längsrichtung;
- Fig. 4A: schematisch einen Schnitt durch eine Sensorfolie mit stufenförmig verlaufender Dicke in Längsrichtung;
- Fig. 4B: schematisch einen Schnitt durch eine Sensorfolie mit linearem Verlauf der Dicke in Längsrichtung;
- Fig. 5: schematisch eine gekrümmt vorgefertigte Sensorfolie;
- Fig. 6: ein Blockschaltbild einer Ausführungsform der Erfassungsvorrichtung; und
- Fig. 7: eine Geige mit einer erfindungsgemäßen Vorrichtung zur Erfassung des Griffmusters.

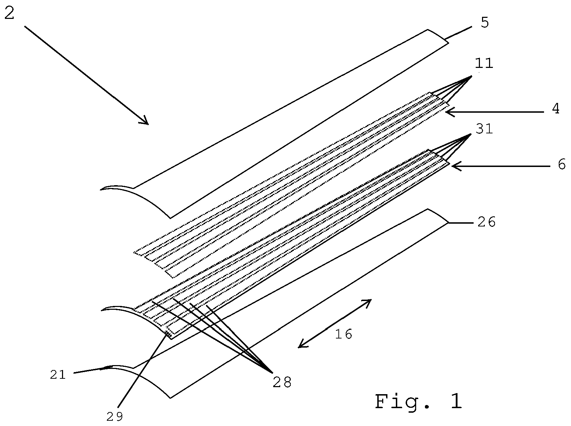

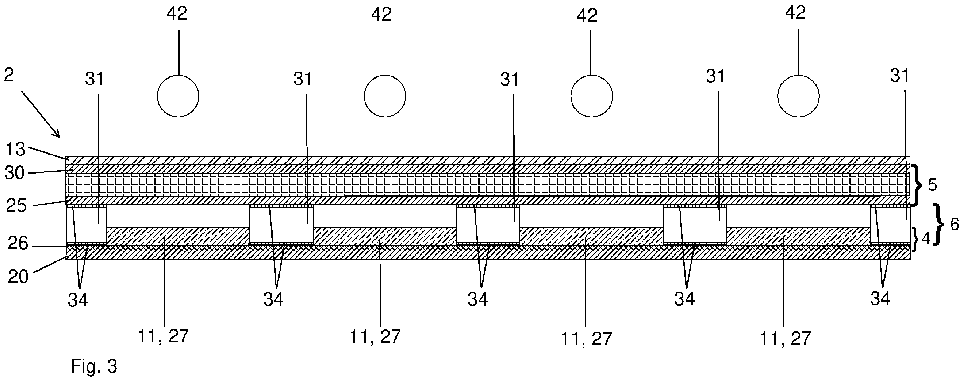

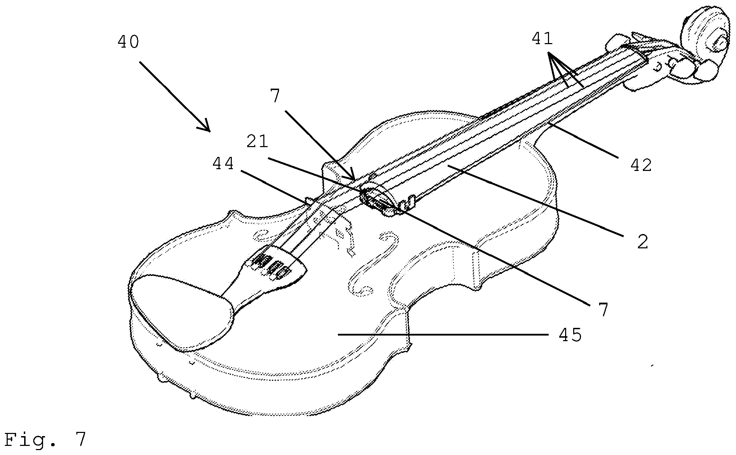

Fig. 1 zeigt eine Explosionsdarstellung der Sensorfolie 2 zur Erfassung des Griffmusters beim Spielen eines Streichinstruments 40 (siehe Fig. 7). Die Sensorfolie 2 besteht zumindest aus einer Leitschicht 5, Abstandschicht 6 und Widerstandsschicht 4. Optional kann noch eine Klebeschicht 20 und eine vorzugsweise transparente Abdeckschicht 13 enthalten sein (siehe auch Fig. 3). Der Anschluss der Sensorfolie 2 erfolgt über eine Kontaktierungslasche 21. Die dargestellte Sensorfolie 2 ist für die Anordnung an einem Streichinstrument 40 mit vier Saiten ausgebildet und weist deshalb entsprechend der Anzahl der Saiten vier Widerstandsbahnen 11 auf. Die Widerstandsschicht 4 umfasst beispielsweise eine Polyester-Folie 26, auf welche die Widerstandsbahnen 11 der Widerstandsschicht 4 angebracht sind. Die Abstandschicht 6 besteht aus mehreren Kunststoffstreifen 31. Zwischen den Kunststoffstreifen 31 sind Ausnehmungen 28 angeordnet, die der Form und Größe der Widerstandsbahnen 11 entsprechen. Die Abstandschicht 6 kann außerdem eine kleine Ausnehmung 29 für den Kontaktierungspunkt 24 aufweisen, damit dieser mit der Leitschicht 5 verbunden werden kann. Zur Orientierung ist die Längsrichtung 16 der Sensorfolie 2 eingezeichnet.

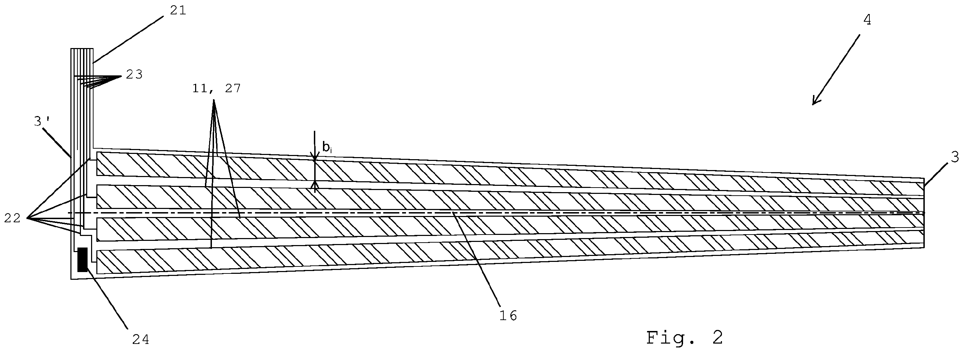

Fig. 2 zeigt eine Draufsicht der Widerstandsschicht 4 mit den aufgedruckten Widerstandsbahnen 11, welche vorzugsweise Kohlenstoff 27 enthalten. Die Breite bᵢ der einzelnen Widerstandsbahnen 11 ist vom schmäleren Ende 3 der Sensorfolie 2, welches im montierten Zustand der Schnecke 43 des Streichinstruments 40 (siehe Fig. 7) zugewandt ist, zum breiteren Ende 3', welches im monierten Zustand dem Steg 44 des Streichinstruments 40 (siehe Fig. 7) zugewandt ist, zunehmend ausgeführt. Die Breite der Bereiche zwischen den Widerstandsbahnen 11 bleibt dabei konstant. Vor allem in dem Bereich der Saiten 41, in welchem ein größerer Spielraum für eine transversale Bewegung der Saite 41 vorhanden ist (das ist der dem Steg 44 näher gelegene Bereich beim Ende 3' der Sensorfolie 2), ist die breitere Ausführung der Widerstandsbahnen 11 von Vorteil und es können auch Fingerpositionen erfasst werden, die quer zur normalen Position der Saite 41 verschoben sind. Durch die nicht konstante Breite bᵢ der Widerstandsbahnen 11 ist es vorteilhaft, für einen linearen Zusammenhang der Widerstandswerte in Abhängigkeit der jeweiligen Griffposition und somit Frequenz des jeweiligen durch die Saite 41 erzeugten Tones eine Kalibration bzw. eine Linearisierung vorzunehmen. Dabei können beispielsweise für alle Widerstandsbahnen 11 die Widerstandswerte in Abhängigkeit aller oder vieler möglicher Griffpositionen und damit erzielbare Tonhöhen aufgezeichnet und gespeichert werden. Durch Berücksichtigung dieses nichtlinearen Zusammenhangs bei der Auswertung der jeweiligen Griffposition kann der Verlauf des Widerstandes zur jeweiligen Griffposition linearisiert werden. Dazu wird auf jeder Saite 41 ein beliebiger Ton gespielt und dessen Frequenz beispielsweise mit einem Mikrofon 9 erfasst. Diese Frequenz wird der Fingerposition und somit der Länge der frei schwingenden Saite 41 zugeordnet. Auf Basis dieser bekannten Frequenz können die Frequenzen aller anderen Fingerpositionen berechnet werden. Ebenso ersichtlich ist die oben beschriebene Kontaktierungslasche 21. Diese verfügt über sechs Ausgänge 23, wobei vier der Ausgänge über Leiterbahnen 22 mit den vier Widerstandsbahnen 11 verbunden sind. Ein Ausgang 23 ist im dargestellten Ausführungsbeispiel nicht kontaktiert und der sechste Ausgang 23 ist über den Kontaktierungspunkt 24 mit der Silberbeschichtung 25 der Leitschicht 5 verbunden.

Fig. 3 zeigt einen Schnitt durch die Sensorfolie 2 quer zur Längsrichtung 16, wobei die gezeigten Proportionen nicht der Realität entsprechen, sondern der besseren Veranschaulichung dienen. Die dargestellte Ausführungsform der Sensorfolie 2 weist eine Klebeschicht 20 auf, darüber befindet sich die Widerstandsschicht 4 aus den Widerstandsbahnen 11 aus Kohlenstoff 27, die auf einer Polyesterschicht 26 aufgebracht sein können. Zwischen den Widerstandsbahnen 11 sind in der Abstandschicht 6 einzelne Kunststoffstreifen 31 angeordnet, welche vorzugsweise an beiden Seiten mit einer Klebeschicht 34 versehen sind. Darüber befindet sich die Leitschicht 5, die auf deren Unterseite mit einer Silberbeschichtung 25 und auf deren Oberseite mit einer Kohlenstoffschicht 30 versehen ist. Über der Kohlenstoffschicht 30 kann eine transparente Abdeckschicht 13 angeordnet sein. Über der Sensorfolie 2 sind die Saiten 42 eines Streichinstruments 40 veranschaulicht.

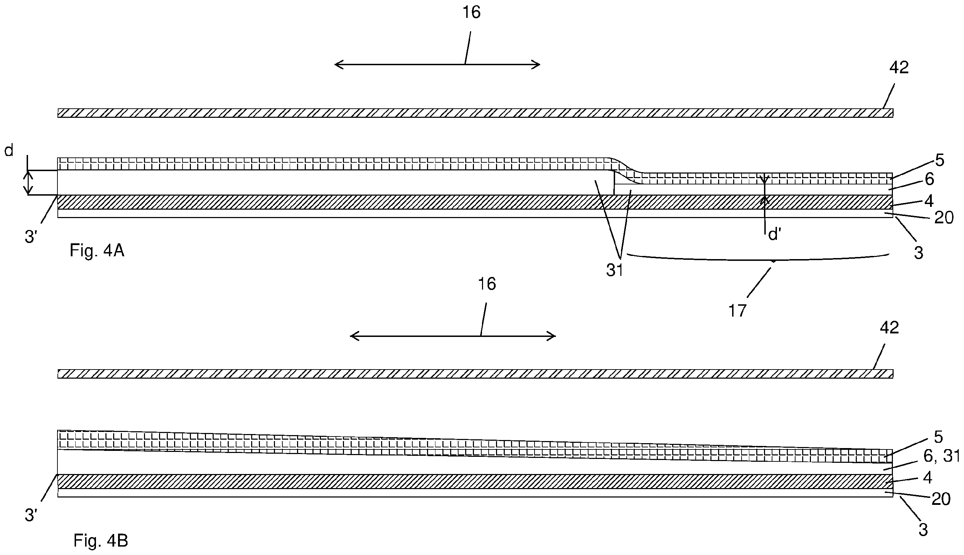

Die Figuren 4A und 4B zeigen jeweils einen Schnitt durch eine Sensorfolie 2 in Längsrichtung 16. Fig. 4A zeigt dabei eine Sensorfolie 2 mit zwei Teilbereichen, wobei ein Teilbereich 17 eine geringere Dicke d' aufweist als die Dicke d der übrigen Sensorfolie 2. Der Übergang 32 erfolgt dabei stufenförmig und ergibt sich durch eine stufenförmige Änderung der Dicke der Abstandschicht 6. Fig. 4B zeigt ebenfalls den Schnitt durch eine Sensorfolie 2 in Längsrichtung 16. In dieser Ausführung ist die Dicke der Sensorfolie 2 linear abnehmend, vom Ende 3' zum Ende 3, gestaltet. Über der Sensorfolie 2 ist die Saite 42 eines Streichinstruments 40 veranschaulicht.

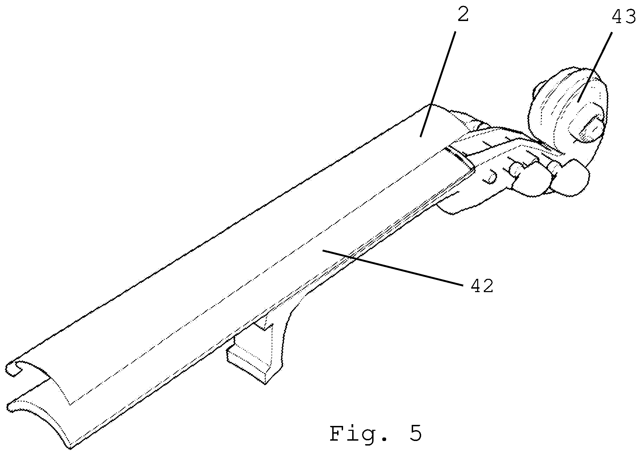

Fig. 5 zeigt eine gekrümmt vorgefertigte Sensorfolie 2. Unter der Sensorfolie 2 ist das Griffbrett 42 eines Streichinstruments 40 dargestellt. Um bereits bei der Fertigung der Sensorfolie 2 eine der Wölbung des Griffbretts 42 entsprechende Krümmung zu ermöglichen, werden beispielsweise zuerst die Widerstands- 4 und die Abstandschicht 6 miteinander verbunden. Im nächsten Schritt wird die Leitschicht 5 an einem Seitenrand in Längsrichtung 16 mit der Abstandschicht 6 verbunden. Danach wird der untere Teil der Sensorfolie 2 (bestehend aus Widerstandsschicht 4 und Abstandschicht 6) auf eine, dem Griffbrett 42 eines Streichinstruments 40 nachgeformte, Unterlage aufgebracht, beispielsweise durch eine lösbare Verklebung. In einem letzten Schritt wird die Leitschicht 5 mit der Abstandschicht 6 verbunden, insbesondere verklebt, und ein allenfalls verbleibender Überstand abgetrennt. Nach dieser Vorfertigung weist die Sensorfolie 2 eine gewünschte Krümmung auf, die der Wölbung des Griffbretts 42 entspricht. Dadurch wird in Querrichtung der Sensorfolie 2 ein im Wesentlichen konstanter Abstand zwischen Widerstandsschicht 4 und Leitschicht 5 und somit gleiche Eigenschaften der Sensorfolie 2 über die gesamte Breite erzielt. Die derart hergestellte Sensorfolie 2 kann am Griffbrett 42 angebracht, insbesondere damit verklebt, werden und ist in diesem gekrümmten Zustand im Wesentlichen spannungsfrei.

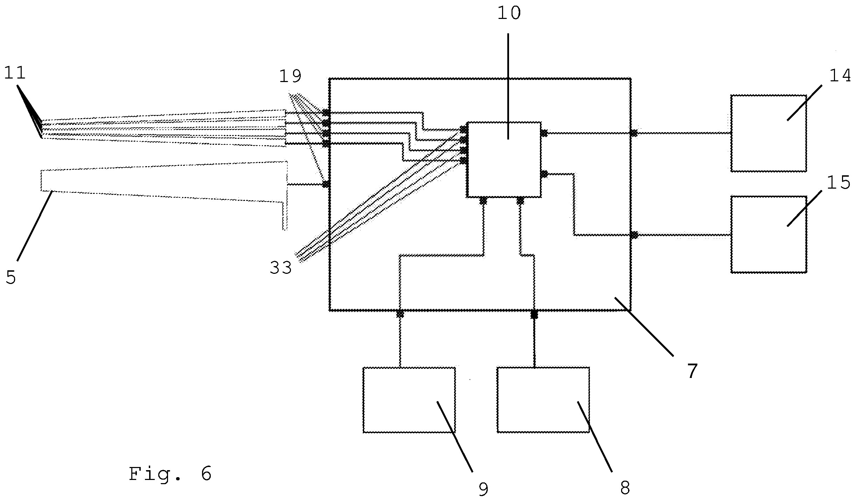

Fig. 6 zeigt ein Blockschaltbild der Vorrichtung 1 zur Erfassung des Griffmusters beim Spielen eines Streichinstruments 40. Die Widerstandsbahnen 11 der Widerstandsschicht 4 sind dabei jeweils separat mit Eingängen 19 der Auswerteschaltung 7 verbunden. Auch die Leitschicht 5 ist mit der Auswerteschaltung 7 verbunden. In der Auswerteschaltung 7 befindet sich als zentrales Element ein Mikrocontroller 10, wobei jede der (hier dargestellten) vier Widerstandsbahnen 11 über die Auswerteschaltung 7 mit jeweils einem Eingang 33 des Mikrocontrollers 10 verbunden ist. Dadurch ist eine parallele Auswertung der einzelnen Widerstände möglich. Mit der Auswerteschaltung 7 bzw. dem Mikrocontroller 10 kann weiters ein Sender 14, eine Schnittstelle 15, ein Bewegungssensor 8 oder ein Mikrofon 9 verbunden sein. Der Sender 14 kann dazu dienen die von der Vorrichtung 1 ermittelten Daten an entsprechende externe Empfänger zur Aufzeichnung oder Weiterverarbeitung zu senden. Ebenso kann die Schnittstelle 15 zur Datenübertragung dienen, aber auch zur Programmierung des Mikrocontrollers 10 verwendet werden. Ein mit der Auswerteschaltung 7 verbundener Bewegungssensor 8 kann zur Aufzeichnung der Bewegung des Streichinstruments 40, und somit des Spielers, verwendet werden. Damit kann dem Spieler weiteres Feedback über seine Spielweise gegeben werden. Das Mikrofon 9 kann zur Ermittlung der gespielten Töne verwendet werden. Über die mit dem Mikrofons 9 aufgezeichneten Töne können die über die Sensorfolie 2 ermittelten Griffe überprüft oder die gesamte Vorrichtung 1 kalibriert bzw. der Widerstandsverlauf linearisiert werden.

Fig. 7 zeigt ein Streichinstrument 40, in diesem Fall eine Geige, mit einer erfindungsgemäßen Vorrichtung 1 zur Erfassung des Griffmusters. Auf dem Griffbrett 42 ist die Sensorfolie 2 aufgebracht. Die Sensorfolie 2 weist Widerstandsbahnen 11 auf, die von der Schnecke 43 in Richtung des Stegs 44 linear verlaufend breiter werden. Die Widerstandsbahnen 11 verlaufen geradlinig unter den Saiten 41 des Streichinstruments 40. Die Auswerteschaltung 7 ist am Resonanzkörper 45 des Streichinstruments 40 unter dem Griffbrett 42, nahe dem Steg 44 angebracht, kann aber auch im Resonanzkörper angebracht sein. Ebenso kann ein Mikrofon 9 (hier nicht dargestellt), das mit der Auswerteschaltung 7 verbunden ist am oder im Resonanzkörper angebracht sein. Mit dem Mikrofon 9 kann die Lautstärke und die Frequenz der gespielten Töne aufgezeichnet werden. Die Auswerteschaltung 7 ist über die Kontaktierungslasche 21 (siehe auch Fig. 1) mit der Sensorfolie 2 verbunden.

## Patentansprüche

1. Vorrichtung (1) zur Erfassung des Griffmusters beim Spielen eines Streichinstruments (40) mit zumindest zwei Saiten (41), welche zwischen einer Schnecke (43) und einem Steg (44) über einem gewölbten Griffbrett (42) gespannt sind, mit einer auf dem Griffbrett (42) anordenbaren Sensorfolie (2) zur Erfassung des Griffmusters, welche Sensorfolie (2) aus zumindest einer Widerstandsschicht (4), einer Leitschicht (5) und einer dazwischen angeordnete Abstandschicht (6) gebildet ist, und mit einer mit der Sensorfolie (2) verbundenen Auswerteschaltung (7), mit welcher Auswerteschaltung (7) die durch das Griffmuster hervorgerufenen Widerstandsänderungen der Sensorfolie (2) erfassbar sind, wobei die untere, dem Griffbrett (42) in montiertem Zustand zugewandte, Schicht der Sensorfolie (2) durch die Widerstandsschicht (4) gebildet ist, welche Widerstandsschicht (4) in einer der Anzahl an Saiten (41) des Streichinstruments (40) entsprechenden Anzahl an Widerstandsbahnen (11) unterteilt ist, und die obere, dem Griffbrett (42) im montierten Zustand abgewandte Schicht der Sensorfolie (2) durch die Leitschicht (5) gebildet ist, **dadurch gekennzeichnet, dass** die Breite (bᵢ) jeder Widerstandsbahn (11) von einem Ende (3) der Sensorfolie (2), welches im montierten Zustand der Schnecke (43) zugewandt ist, zum anderen Ende (3') der Sensorfolie (2), welches im montierten Zustand dem Steg (44) zugewandt ist, linear zunehmend ausgebildet ist, dass die Sensorfolie (2) eine der Wölbung des Griffbretts (42) entsprechende Krümmung in einer Richtung quer zur Längsrichtung (16) aufweist, sodass in Querrichtung der Sensorfolie (2) ein im Wesentlichen konstanter Abstand zwischen den Widerstandsbahnen (11) und der Leitschicht (5) resultiert, und dass die Auswerteschaltung (7) mehrere Eingänge (19) zur parallelen Verbindung mit jeder Widerstandsbahn (11) der Sensorfolie (2) und zur parallelen Verarbeitung des Griffmusters aufweist.

2. Erfassungsvorrichtung (1) nach Anspruch 1, **dadurch gekennzeichnet, dass** die Sensorfolie (2) in Längsrichtung (16) einen Teilbereich (17) aufweist, der geringere Dicke (d') aufweist als die Dicke (d) der übrigen Sensorfolie (2), wobei der Teilbereich (17) der Sensorfolie (2) mit der geringeren Dicke (d') vorzugsweise durch eine dünnere Abstandschicht (6) gebildet ist.

3. Erfassungsvorrichtung (1) nach Anspruch 1, **dadurch gekennzeichnet, dass** die Dicke (d) der Sensorfolie (2) vom einen Ende (3) der Sensorfolie (2), welches im montierten Zustand der Schnecke (43) zugewandt ist, zum anderen Ende (3') der Sensorfolie (2), welches im montierten Zustand dem Steg (44) zugewandt ist, linear abnehmend ausgebildet ist.

4. Erfassungsvorrichtung (1) nach einem der Ansprüche 1 bis 3, **dadurch gekennzeichnet, dass** die Widerstandsschicht (4) der Sensorfolie (2) Kohlenstoff beinhaltet.

5. Erfassungsvorrichtung (1) nach einem der Ansprüche 1 bis 4, **dadurch gekennzeichnet, dass** die Leitschicht (5) der Sensorfolie (2) aus Silber besteht oder Silber beinhaltet.

6. Erfassungsvorrichtung (1) nach einem der Ansprüche 1 bis 5, **dadurch gekennzeichnet, dass** die Abstandschicht (6) der Sensorfolie (3) aus einzelnen Streifen (12) aus Kunststoff, insbesondere Polyimid oder Polyamid, besteht und vorzugsweise beidseitig mit einer Klebeschicht (18) versehen ist.

7. Erfassungsvorrichtung (1) nach einem der Ansprüche 1 bis 6, **dadurch gekennzeichnet, dass** über der Leitschicht (5) eine transparente Abdeckschicht (13) angeordnet ist.

8. Erfassungsvorrichtung (1) nach einem der Ansprüche 1 bis 7, **dadurch gekennzeichnet, dass** an der dem Griffbrett (42) in montiertem Zustand zugewandten Widerstandsschicht (4) der Sensorfolie (2) eine Klebeschicht (20) angeordnet ist.

9. Erfassungsvorrichtung (1) nach einem der Ansprüche 1 bis 8, **dadurch gekennzeichnet, dass** die Sensorfolie (2) eine minimale Dicke (d) kleiner 0,7 mm, vorzugsweise kleiner 0,5 mm, besonders bevorzugt kleiner 0,35 mm, aufweist.

10. Erfassungsvorrichtung (1) nach einem der Ansprüche 1 bis 9, **dadurch gekennzeichnet, dass** die Auswerteschaltung (7) einen Mikrocontroller (10) beinhaltet.

11. Erfassungsvorrichtung (1) nach einem der Ansprüche 1 bis 10, **dadurch gekennzeichnet, dass** die Auswerteschaltung (7) mit einem Sender (14) und bzw. oder mit einer Schnittstelle (15) verbunden ist.

12. Erfassungsvorrichtung (1) nach einem der Ansprüche 1 bis 11, **dadurch gekennzeichnet, dass** ein Bewegungssensor (8) zur Erfassung der translatorischen Bewegung, insbesondere ein 3-D Gyroskop, vorgesehen und mit der Auswerteschaltung (7) verbunden ist.

13. Erfassungsvorrichtung (1) nach Ansprüchen 1 bis 12, **dadurch gekennzeichnet, dass** ein Mikrofon (9), insbesondere ein Kontaktmikrofon, vorgesehen und mit der Auswerteschaltung (7) verbunden ist.

14. Streichinstrument (40), insbesondere Geige, mit zumindest zwei über einem gewölbten Griffbrett (42) zwischen einer Schnecke (43) und einem Steg (44) gespannten Saiten (41), **dadurch gekennzeichnet, dass** eine Vorrichtung (1) zur Erfassung des Griffmusters beim Spielen nach einem der Ansprüche 1 bis 13 vorgesehen ist.

15. Streichinstrument (40) nach Anspruch 14, **dadurch gekennzeichnet, dass** die Sensorfolie (2) am Griffbrett (42) aufgeklebt ist.

## Claims

1. Device (1) for detecting the finger pattern while a stringed instrument (40) comprising at least two strings (41) which are stretched between a scroll (43) and a bridge (44) over a curved fingerboard (42) is played, said device comprising a sensor film (2) that can be arranged on the fingerboard (42) for detecting the finger pattern, which sensor film (2) is formed by at least one resistance layer (4), a conducting layer (5), and a spacer layer (6) arranged therebetween, and comprising an analysis circuit (7) connected to the sensor film (2), by means of which analysis circuit (7) the resistance changes in the sensor film (2) which are caused by the finger pattern can be detected, the lower layer of the sensor film (2) that faces the fingerboard (42) in the mounted state being formed by the resistance layer (4), which resistance layer (4) is divided into a number of resistance tracks (11) that corresponds to the number of strings (41) of the stringed instrument (40), and the upper layer of the sensor film (2) that faces away from the fingerboard (42) in the mounted state being formed by the conducting layer (5), **characterised in that** the width (bᵢ) of each resistance track (11) increases linearly from one end (3) of the sensor film (2) that faces the scroll (43) in the mounted state to the other end (3') of the sensor film (2) that faces the bridge (44) in the mounted state, **in that** the sensor film (2) has, in a direction transverse to the longitudinal direction (16), a curvature that corresponds to the curve of the fingerboard (42), such that a substantially constant spacing between the resistance tracks (11) and the conducting layer (5) in the transverse direction of the sensor film (2) results, and **in that** the analysis circuit (7) has a plurality of inputs (19) for parallel connection to each resistance track (11) of the sensor film (2) and for the parallel processing of the finger pattern.

2. Detection device (1) according to claim 1, **characterised in that** the sensor film (2) has a portion (17) in the longitudinal direction (16) that has a thickness (d') smaller than the thickness (d) of the rest of the sensor film (2), the portion (17) of the sensor film (2) with the smaller thickness (d') preferably being formed by a thinner spacer layer (6).

3. Detection device (1) according to claim 1, **characterised in that** the thickness (d) of the sensor film (2) decreases linearly from one end (3) of the sensor film (2) that faces the scroll (43) in the mounted state to the other end (3') of the sensor film (2) that faces the bridge (44) in the mounted state.

4. Detection device (1) according to any of claims 1 to 3, **characterised in that** the resistance layer (4) of the sensor film (2) contains carbon.

5. Detection device (1) according to any of claims 1 to 4, **characterised in that** the conducting layer (5) of the sensor film (2) consists of silver or contains silver.

6. Detection device (1) according to any of claims 1 to 5, **characterised in that** the spacer layer (6) of the sensor film (3) consists of individual strips (12) made of plastic, in particular polyimide or polyamide, and is preferably provided with an adhesive layer (18) on both sides.

7. Detection device (1) according to any of claims 1 to 6, **characterised in that** a transparent covering layer (13) is arranged above the conducting layer (5).

8. Detection device (1) according to any of claims 1 to 7, **characterised in that** an adhesive layer (20) is arranged on the resistance layer (4) of the sensor film (2) that faces the fingerboard (42) in the mounted state.

9. Detection device (1) according to any of claims 1 to 8, **characterised in that** the sensor film (2) has a minimum thickness (d) of less than 0.7 mm, preferably less than 0.5 mm, particularly preferably less than 0.35 mm.

10. Detection device (1) according to any of claims 1 to 9, **characterised in that** the analysis circuit (7) contains a microcontroller (10).

11. Detection device (1) according to any of claims 1 to 10, **characterised in that** the analysis circuit (7) is connected to a transmitter (14) and/or to an interface (15).

12. Detection device (1) according to any of claims 1 to 11, **characterised in that** a movement sensor (8) for detecting translational movement, in particular a 3D gyroscope, is provided and connected to the analysis circuit (7).

13. Detection device (1) according to claims 1 to 12, **characterised in that** a microphone (9), in particular a contact microphone, is provided and connected to the analysis circuit (7).

14. Stringed instrument (40), in particular a violin, comprising at least two strings (41) stretched over a curved fingerboard (42) between a scroll (43) and a bridge (44), **characterised in that** a device (1) for detecting the finger pattern during playing according to any of claims 1 to 13 is provided.

15. Stringed instrument (40) according to claim 14, **characterised in that** the sensor film (2) is adhered to the grip board (42).

## Revendications

1. Dispositif (1) pour détecter le motif de toucher lors du jeu d'un instrument à archet (40) avec au moins deux cordes (41) qui sont tendues entre une volute (43) et un chevalet (44) au-dessus d'une touche incurvée (42), avec une feuille formant capteur (2) qui peut être disposée sur la touche (42) pour détecter le motif de toucher, laquelle feuille formant capteur (2) est formée d'au moins une couche résistive (4), une couche conductrice (5) et une couche d'espacement (6) disposée entre les deux, et avec un circuit d'évaluation (7) relié à la feuille formant capteur (2), circuit d'évaluation (7) avec lequel les changements de résistance de la feuille formant capteur (2) provoqués par le motif de toucher peuvent être détectés, où la couche inférieure de la feuille formant capteur (2), tournée vers la touche (42) à l'état monté est formée par la couche résistive (4), laquelle couche résistive (4) est subdivisée en un certain nombre de rubans résistifs (11) correspondant au nombre de cordes (41) de l'instrument à archet (40), et la couche supérieure de la feuille formant capteur (2) tournée à l'opposé de la touche (42) à l'état monté est formée par la couche conductrice (5), **caractérisé en ce que** la largeur (bᵢ) de chaque ruban résistif (11) est agencée en augmentant linéairement d'une extrémité (3) de la feuille formant capteur (2), qui fait face à la volute (43) à l'état monté, à l'autre extrémité (3') de la feuille formant capteur (2), qui fait face au chevalet (44) à l'état monté, **en ce que** la feuille formant capteur (2) présente une courbure correspondant à l'incurvation de la touche (42) dans une direction transversale à la direction longitudinale (16), de sorte que dans la direction transversale de la feuille formant capteur (2) il en résulte une distance sensiblement constante entre les rubans résistifs (11) et la couche conductrice (5) et **en ce que** le circuit d'évaluation (7) présente plusieurs entrées (19) pour la liaison parallèle avec chaque ruban résistif (11) de la feuille formant capteur (2) et pour le traitement parallèle du motif de toucher.

2. Dispositif de détection (1) selon la revendication 1, **caractérisé en ce que** la feuille formant capteur (2) présente une zone partielle (17) dans la direction longitudinale (16) qui présente une épaisseur (d') inférieure à l'épaisseur (d) du reste de la feuille formant capteur (2), où la zone partielle (17) de la feuille formant capteur (2) avec la plus petite épaisseur (d') est de préférence formée par une couche d'espacement (6) plus mince.

3. Dispositif de détection (1) selon la revendication 1, **caractérisé en ce que** l'épaisseur (d) de la feuille formant capteur (2) est conçue pour diminuer linéairement d'une extrémité (3) de la feuille formant capteur (2), qui fait face à la volute (43) à l'état monté, à l'autre extrémité (3') de la feuille formant capteur (2), qui fait face au chevalet (44) à l'état monté,.

4. Dispositif de détection (1) selon l'une des revendications 1 à 3, **caractérisé en ce que** la couche résistive (4) de la feuille formant capteur (2) contient du carbone.

5. Dispositif de détection (1) selon l'une des revendications 1 à 4, **caractérisé en ce que** la couche conductrice (5) de la feuille formant capteur (2) consiste en argent ou contient de l'argent.

6. Dispositif de détection (1) selon l'une des revendications 1 à 5, **caractérisé en ce que** la couche d'espacement (6) de la feuille formant capteur (3) consiste en bandes individuelles (12) en matière synthétique, en particulier en polyimide ou polyamide, et de préférence est munie d'une couche adhésive (18) des deux côtés.

7. Dispositif de détection (1) selon l'une des revendications 1 à 6, **caractérisé en ce qu'**une couche de couverture transparente (13) est disposée au-dessus de la couche conductrice (5).

8. Dispositif de détection (1) selon l'une des revendications 1 à 7, **caractérisé en ce qu'**une couche adhésive (20) est disposée sur la couche résistive (4) de la feuille formant capteur (2) faisant face à la touche (42) à l'état monté.

9. Dispositif de détection (1) selon l'une des revendications 1 à 8, **caractérisé en ce que** la feuille formant capteur (2) présente une épaisseur (d) minimale inférieure à 0,7 mm, de préférence inférieure à 0,5 mm, de manière particulièrement préférée inférieure à 0,35 mm.

10. Dispositif de détection (1) selon l'une des revendications 1 à 9, **caractérisé en ce que** le circuit d'évaluation (7) contient un microdispositif de commande (10).

11. Dispositif de détection (1) selon l'une des revendications 1 à 10, **caractérisé en ce que** le circuit d'évaluation (7) est relié à un émetteur (14) et/ou à une interface (15).

12. Dispositif de détection (1) selon l'une des revendications 1 à 11, **caractérisé en ce qu'**un capteur de mouvement (8) pour détecter le mouvement de translation, en particulier un gyroscope 3D, est prévu et relié au circuit d'évaluation (7).

13. Dispositif de détection (1) selon les revendications 1 à 12, **caractérisé en ce qu'**un microphone (9), en particulier un microphone à contact, est prévu et relié au circuit d'évaluation (7).

14. Instrument à archet (40), en particulier violon, avec au moins deux cordes (41) tendues au-dessus d'une touche incurvée (42) entre une volute (43) et un chevalet (44), **caractérisé en ce qu'**un dispositif (1) pour détecter le motif de toucher lors du jeu selon l'une des revendications 1 à 13 est prévu.

15. Instrument à archet (40) selon la revendication 14, **caractérisé en ce que** la feuille formant capteur (2) est collée sur la touche (42).
